# EUROPEAN PATENT APPLICATION

(11) **EP 2 993 299 A1**
(43) Date of publication of application: **09.03.2016**
(21) Application number: 15178459.2
(22) Date of filing: 27.07.2015
(51) Int. Cl.: F01D 5/14, F01D 5/28, F04D 29/32, F04D 29/38

(54) **COMPOSITE FAN BLADE AND CORRESPONDING MANUFACTURING METHOD**

(30) Priority: 15.08.2014 GB 201414495
(71) Applicant: Rolls-Royce plc, London SW1E 6AT (GB); Rolls-Royce Deutschland Ltd & Co KG, 15827 Blankenfelde-Mahlow (DE)
(72) Inventor: Wallis, Michael, Derby, Derbyshire DE24 8BJ (GB); McElhone, Martin, Derby, Derbyshire DE24 8BJ (GB); Seydel, Christian, Derby, Derbyshire DE24 8BJ (GB); Smout, Peter, Derby, Derbyshire DE24 8BJ (GB)
(74) Representative: Rolls-Royce plc

(57) **Abstract**

A composite fan blade for a gas turbine engine, the blade comprises a root portion for connecting the blade to a hub and an aerofoil portion. The aerofoil portion comprises an external cover formed from a non-metallic material and an internal structure enclosed within the cover. The internal structure comprises a plurality of support members extending generally from a pressure side of the internal structure to a suction side of the internal structure, and wherein the plurality of support members define a plurality of cells or channels. A corresponding manufacturing method is also provided.

## Description

### FIELD OF INVENTION

The present invention relates to a fan blade for a gas turbine engine.

### BACKGROUND

Turbofan gas turbine engines (which may be referred to simply as 'turbofans') are typically employed to power aircraft. Turbofans are particularly useful on commercial aircraft where fuel consumption is a primary concern. Typically a turbofan gas turbine engine will comprise an axial fan driven by an engine core. The engine core is generally made up of one or more turbines which drive respective compressors via coaxial shafts. The fan is usually driven directly off an additional lower pressure turbine in the engine core.

The fan comprises an array of radially extending fan blades mounted on a rotor and will usually provide, in current high bypass gas turbine engines, around seventy-five percent of the overall thrust generated by the gas turbine engine. The remaining portion of air from the fan is ingested by the engine core and is further compressed, combusted, accelerated and exhausted through a nozzle. The engine core exhaust mixes with the remaining portion of relatively high-volume, low-velocity air bypassing the engine core through a bypass duct.

Conventionally the fan blades are manufactured from a metallic material, such as titanium. The titanium blades generally have a honeycomb centre or a diffusion bonded super plastically formed internal structure so that the weight of the blades can be reduced.

In recent years there has been a move towards manufacturing blades from composite (non-metallic) materials. Composite materials are generally lighter than titanium alloys, but generally this weight benefit is not seen by the fan blade (or not seen to a great extent) because the fan blade needs to be made as a solid component to meet the strength requirements for a blade.

US6431837 discloses a composite fan blade having an internal structure that defines four hollow sections. However, there is a desire in the industry to provide a fan blade having improved impact performance and reduced weight compared to the fan blade described in US6431837.

### SUMMARY OF INVENTION

The invention seeks to provide a composite fan blade having reduced weight and/or improved impact performance (e.g. in the event of bird strike) compared to fan blades of the prior art.

A first aspect of the invention provides a composite fan blade for a gas turbine engine. The blade comprises a root portion for connecting the blade to a hub and an aerofoil portion. The aerofoil portion comprises an external cover formed from a non-metallic material and an internal structure enclosed within the cover. The internal structure comprises a plurality of support members extending generally from a pressure side of the internal structure to a suction side of the internal structure. The plurality of support members define a plurality of cells or channels.

The support members may be walls. The support members or walls may define a plurality of directly adjacent cells or channels.

A second aspect of the invention provides a composite fan blade for a gas turbine engine. The blade comprises a root portion for connecting the blade to a hub, and an aerofoil portion. The aerofoil portion comprises an external cover formed from a non-metallic material and an internal structure enclosed within the cover. The internal structure defines a plurality of walls that define a plurality of directly adjacent cells or channels.

The support members or walls of the first and/or the second aspect can increase the stiffness of the blade and the cellular structure can increase energy absorption if the blade is impacted either by a foreign object such as bird or by a released fan blade.

The cover may also be referred to in the art as a skin.

One or more of the following optional features may be applied to the first or second aspects.

At least one of the walls may have a maximum dimension (e.g. thickness, length or width) in a direction lateral to the external cover at a corresponding radial and circumferential position on the cover.

Open space of the cells or channels of the internal structure may occupy a volume greater than the volume of the support members or the walls defining the cells or channels. For example, the support members or walls provide reinforcement to the hollow structure rather than providing a solid structure that defines holes.

The internal structure may define at least 10 cells or channels.

The thickness of the walls or support members may be narrower than the width of the cells or channels, when measured in the same direction.

At least a portion of the cells of the internal structure may be open cells.

The cells may be arranged irregularly. For example, the structure may be referred to as an irregular cellular structure. The cellular structure may be open or closed.

Tests have found that providing an irregular cell structure can further increase the stiffness and energy absorption capability of the blade. A particularly beneficial cell structure may resemble that of a trabecular bone (e.g. a human trabecular bone).

The inventors of the present invention have taken a step away from the prejudice in the art towards the more conventional fan blade designs, and have realised that stiffness and energy absorption properties of the blade can be improved and the weight of the blade reduced by using an internal structure having an arrangement similar to that found in nature, e.g. in the human bone.

At least a portion of the cells may be closed cells.

The cells may be regularly arranged.

The internal structure may have a honeycomb structure.

The internal structure may include a plate having a waved profile so as to form a series of elongate channels.

The internal structure may comprise aluminium and/or titanium, e.g. the internal structure may be made from aluminium or titanium or an alloy thereof.

The internal structure may be made from a composite material.

The cover and the root portion may be defined by two members and the internal structure may be positioned between the two members.

The two members may be connected to the internal structure by bonding or via a connector.

The two members may be connected using stitching or pinning. The internal structure may be connected to the cover using adhesive.

The blade may have a metallic leading edge and/or a metallic blade tip.

A third aspect of the invention provides a method of manufacturing a composite fan blade having a root portion and an aerofoil portion. The method may comprise the steps of providing a cover defining at least part of the aerofoil portion, the cover being made from a composite non-metallic material. Providing an internal supporting structure and surrounding the internal supporting structure with the cover and joining the internal structure to the cover.

Manufacturing the cover and the internal supporting structure as separate components which are then connected together means that it is possible for the internal supporting structure to have more complex geometry. The complex geometry can be selected for improved stiffness of the blade and increased energy absorption during impact. Current methods of manufacturing a composite blade with a hollow portion, e.g. forming a hollow structure using an inflated balloon, are not capable of forming such complex geometry (e.g. the current methods are not capable of forming closely spaced small cell structures).

The internal supporting structure may be manufactured using additive layer manufacturing.

The internal structure may be made using machining, superplastic forming or injection moulding.

The internal supporting structure may be made from a composite (non-metallic) material or may be made from a metallic material, for example titanium or aluminium or an alloy thereof.

The additive layer manufacturing may be powder-bed additive layer manufacturing. Powder bed additive manufacturing may be particularly suitable for forming an open cell structure.

The internal structure may be formed from a gas blown polymer foam. The gas blown polymer foam may have a closed cell structure.

The blade may be the blade of the first or second aspects.

A fourth aspect of the invention provides a gas turbine engine comprising the blade of the first or second aspects.

### DESCRIPTION OF DRAWINGS

The invention will now be described, by way of example only, with reference to the accompanying drawings in which:
Figure 1 illustrates a cross-section axial view of a gas turbine engine;
Figure 2 illustrates a side view of a fan blade;
Figure 3 illustrates an exploded view of a fan blade; and
Figures 4 to 6 illustrates alternative internal structures for the fan blade of Figure 3.

### DETAILED DESCRIPTION

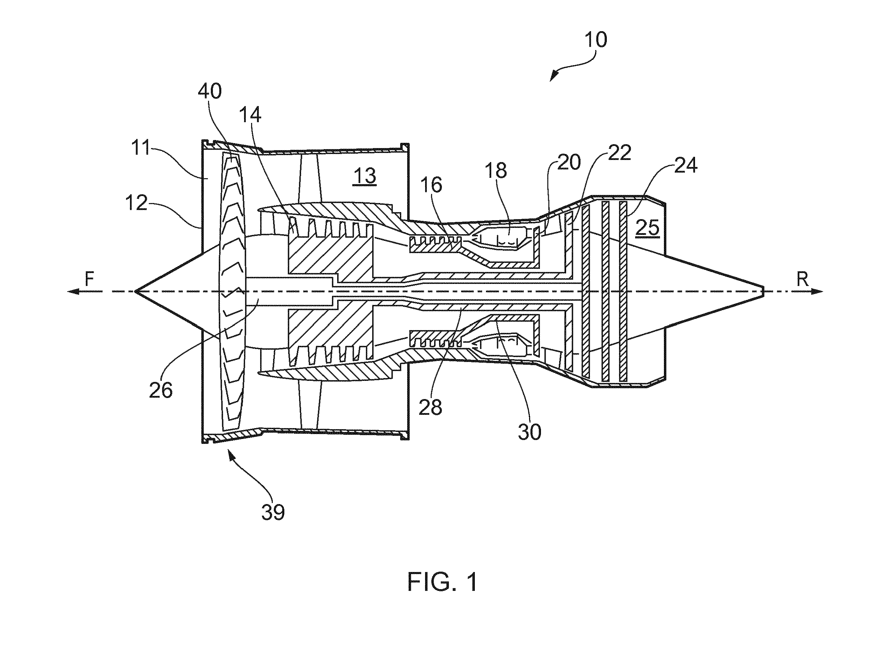

With reference to Figure 1 a bypass gas turbine engine is indicated at 10. The engine 10 comprises, in axial flow series, an air intake duct 11, fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. The fan 12, compressors 14, 16 and turbines 20, 22, 24 all rotate about the major axis of the gas turbine engine 10 and so define the axial direction of the gas turbine engine.

Air is drawn through the air intake duct 11 by the fan 12 where it is accelerated. A significant portion of the airflow is discharged through the bypass duct 13 generating a corresponding portion of the engine thrust. The remainder is drawn through the intermediate pressure compressor 14 into what is termed the core of the engine 10 where the air is compressed. A further stage of compression takes place in the high pressure compressor 16 before the air is mixed with fuel and burned in the combustor 18. The resulting hot working fluid is discharged through the high pressure turbine 20, the intermediate pressure turbine 22 and the low pressure turbine 24 in series where work is extracted from the working fluid. The work extracted drives the intake fan 12, the intermediate pressure compressor 14 and the high pressure compressor 16 via shafts 26, 28, 30. The working fluid, which has reduced in pressure and temperature, is then expelled through the exhaust nozzle 25 generating the remainder of the engine thrust.

The intake fan 12 comprises an array of radially extending fan blades 40 that are mounted to the shaft 26. The shaft 26 may be considered a hub at the position where the fan blades 40 are mounted. Figure 1 shows that the fan 12 is surrounded by a fan containment system 39 that also forms one wall or a part of the bypass duct 13.

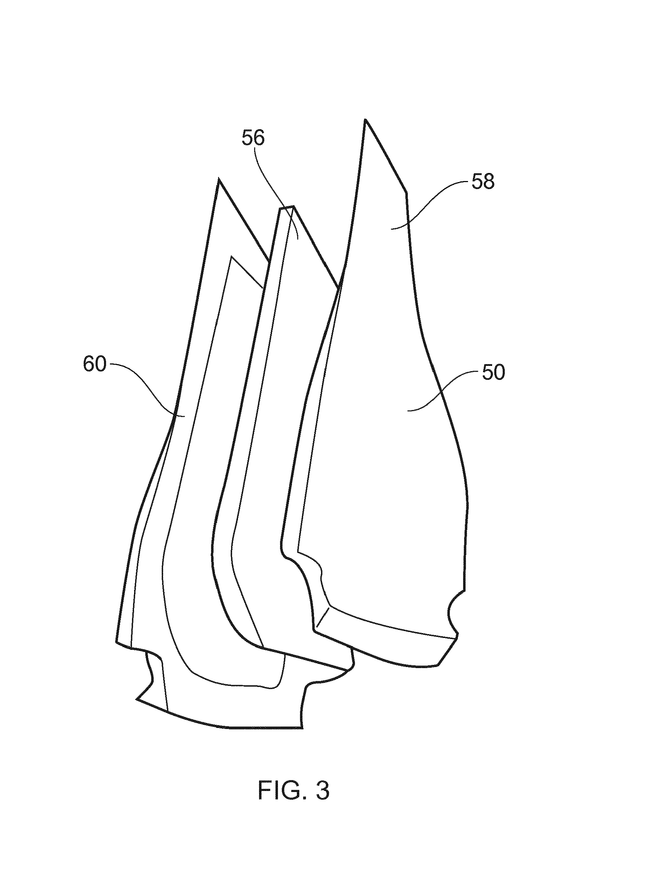

In the present application a forward direction (indicated by arrow F in Figure 3) and a rearward direction (indicated by arrow R in Figure 3) are defined in terms of axial airflow through the engine 10.

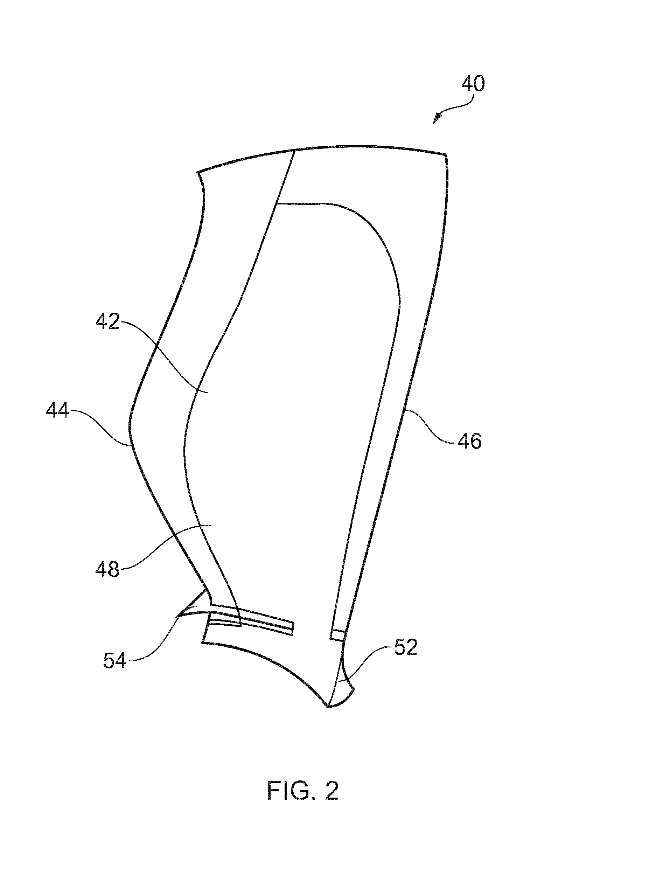

Referring to Figure 2, the fan blades 40 each comprise an aerofoil portion 42 having a leading edge 44, a trailing edge 46, a concave pressure surface wall 48 extending from the leading edge to the trailing edge and a convex suction surface wall (not shown in Figure 2 but indicated at 50 in Figure 3) extending from the leading edge to the trailing edge. The fan blade has a root 52, which may be hollow, the fan blade may also have an integral platform 54 which may be hollow or ribbed for out of plane bending stiffness. The fan blade includes a metallic leading edge and a metallic tip. Methods of connecting a metallic leading edge and a metallic tip to a composite blade are known in the art so are not described in detail here.

Referring now to Figure 3, the fan blade includes a cover or a skin and an internal structure 56. The internal structure is encased within the cover. The cover is provided in two parts 58, 60; one part of the cover defining the suction surface wall of the blade and one part of the cover defining the pressure surface wall of the blade. In the present embodiment the root portion is formed integrally with the cover and is also formed in two parts. The two parts of the cover are joined together to define the aerofoil and the root portion of the blade. In alternative embodiments, the root may be formed separately to the cover and later joined to the cover.

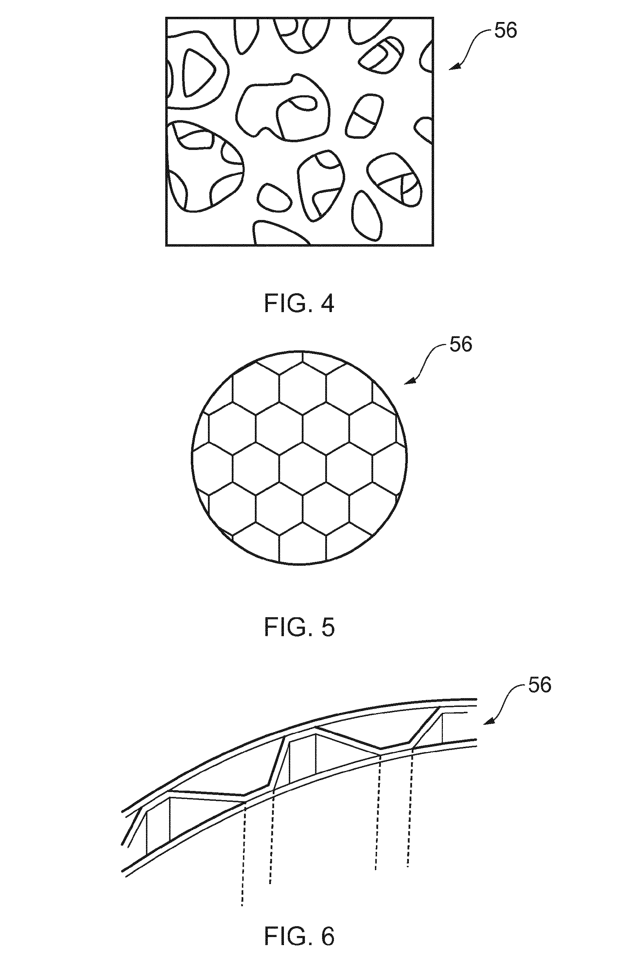

Referring now to Figures 4 to 6, various arrangements for the internal structure 56 are shown in more detail.

In the embodiment shown in Figure 4, the internal structure is cellulous. The cells are open. The cells are arranged in an irregular manner. The design of the internal structure is similar to open cell structures found in nature, for example the cellular structure of bone.

In the embodiment shown in Figure 5, the internal structure is again cellulous, but this time the cells are closed. The cells are arranged in a regular arrangement. The design of the internal structure would be recognised in the art as a honeycomb structure.

In the embodiment shown in Figure 6, the internal structure forms a series of channels along the length of the blade. The internal structure is formed from a sheet having a waved profile. The internal structure and the cover together defining the perimeter walls of the blade.

As can be seen in each of these embodiments, the width of the walls defining the cells is relatively thin compared to the width of the cells. Further it can be seen that the cells are closely packed together. The cells extend over substantially the full extent of the aerofoil portion of the blade. The size of the cells and the close arrangement of the cells contribute to energy absorption in the event of an impact from a foreign object such as a bird, or in the event of impact by a released fan blade. The arrangements shown have also been found to provide a desirable blade stiffness for improved aerodynamic efficiency and reduced noise. Furthermore, the arrangements shown in Figures 4 to 6 can result in a fan blade weighing less than fan blades of the prior art. As well as the direct weight saving from the blade, a blade of reduced weight may also mean that the weight of the fan containment system and/or the hub can be reduced.

The blade is manufactured by forming the two parts of the cover and the internal structure as separate components. The two parts of the cover are formed using composite (non-metallic material), e.g. using tape lay-up methods or other methods such as braiding. These methods are understood in the art so will not be described in more detail here.

The internal structure illustrated in Figure 4 may be manufactured using additive layer manufacturing. The internal structure illustrated in Figure 5 may be manufactured using additive layer manufacturing or using traditional honeycomb production techniques such as expansion, corrugation or moulding. The internal structure illustrated in Figure 6 may be superplastically formed, injection moulded (e.g. metal injection moulded), machined, forged or manufactured using additive layer manufacturing.

The material of the internal structure may be composite, plastic or a metal such as aluminium or titanium (or an alloy of aluminium or titanium). The material can be selected using standard modelling techniques and/or basic experiments and will depend on factors such as engine size.

To assembly the blade, the internal structure is positioned between the two parts of the cover. The two parts of the cover are joined together and the internal structure is joined to the cover. The internal structure can be joined to the cover using, for example, adhesive or stitching. The two parts of the cover can be joined together using, for example, stitching or pinning.

Manufacturing the blade in three parts (two cover parts and the internal structure) means that the internal structure can have a more complex geometry than would otherwise be possible using currently known manufacturing techniques.

It will be appreciated by one skilled in the art that, where technical features have been described in association with one or more embodiments, this does not preclude the combination or replacement with features from other embodiments where this is appropriate. Furthermore, equivalent modifications and variations will be apparent to those skilled in the art from this disclosure. Accordingly, the exemplary embodiments of the invention set forth above are considered to be illustrative and not limiting.

## Claims

1. A composite fan blade for a gas turbine engine, the blade comprising:
a root portion for connecting the blade to a hub and an aerofoil portion;
the aerofoil portion comprising:
an external cover formed from a non-metallic material; and
an internal structure enclosed within the cover;
wherein the internal structure comprises a plurality of support members extending generally from a pressure side of the internal structure to a suction side of the internal structure, and wherein the plurality of support members define a plurality of cells or channels.

2. The blade according to claim 1, wherein open space of the cells or channels of the internal structure occupies a volume greater than the volume of the support members or the walls defining the cells or channels.

3. The blade according to any one of the previous claims, wherein the internal structure defines at least 10 cells or channels.

4. The blade according to any one of the previous claims, wherein the thickness of the walls or support members is narrower than the width of the cells or channels, when measured in the same direction.

5. The blade according to any one of the previous claims, wherein at least a portion of the cells of the internal structure are open cells.

6. The blade according to any one of the previous claims, wherein the cells are arranged irregularly.

7. The blade according to claim 5 or 6, wherein the internal structure has a structure similar to that found in a trabecular bone.

8. The blade according to any one of claims 1 to 4, wherein at least a portion of the cells are closed cells.

9. The blade according to claim 8, wherein the cells are regularly arranged.

10. The blade according to any one of claims 1 to 5 and 8 to 9, wherein the internal structure has a honeycomb structure.

11. The blade according to any one of claims 1 to 5, wherein the internal structure includes a plate having a waved profile so as to form a series of elongate channels.

12. The blade according to any one of the previous claims, wherein the internal structure comprises aluminium and/or titanium.

13. The blade according to any one of the previous claims, wherein the cover and the root portion is defined by two members and the internal structure is positioned between the two members.

14. A gas turbine engine comprising the blade according to any one of the previous claims.

15. A method of manufacturing a composite fan blade having a root portion and an aerofoil portion, the method comprising the steps of:
providing a cover defining at least part of the aerofoil portion, the cover being made from a composite non-metallic material;
providing an internal supporting structure, the internal supporting structure having a plurality of support members extending generally, when the blade is assembled, from a pressure side of the internal structure to a suction side of the internal structure, and wherein the plurality of support members define a plurality of cells or channels; and
surrounding the internal supporting structure with the cover and joining the internal structure to the cover.
